# EUROPÄISCHE PATENTSCHRIFT

(11) **EP 1 446 210 B1**
(45) Veröffentlichungstag und Bekanntmachung des Hinweises auf die Patenterteilung: **14.02.2007**
(21) Anmeldenummer: 02787628.3
(22) Anmeldetag: 11.11.2002
(51) Int. Cl.: B01D 11/02

(54) **VERFAHREN ZUR EXTRAKTION UND ANALYSE VON INHALTSSTOFFEN AUS ORGANISCHEM MATERIAL**
METHOD FOR THE EXTRACTION AND ANALYSIS OF CONTENTS MADE FROM ORGANIC MATERIAL
PROCEDE D'EXTRACTION DE SUBSTANCES A PARTIR D'UNE MATIERE ORGANIQUE ET D'ANALYSE DE CES SUBSTANCES

(30) Priorität: 13.11.2001 DE 10155504; 29.01.2002 DE 10203552
(43) Veröffentlichungstag der Anmeldung: 18.08.2004
(73) Patentinhaber: Metanomics GmbH, 10589 Berlin (DE)
(72) Erfinder: HEROLD, Michael, Manfred, 10589 Berlin (DE); DOSTLER, Martin, 16761 Henningsdorf (DE); LOOSER, Ralf, 13158 Berlin (DE); WALK, Tilmann, B., 10627 Berlin (DE); FEGERT, Achim, 67117 Limburgerhof (DE); KLUTTIG, Martin, 13585 Berlin (DE); LEHMANN, Britta, 12247 Berlin (DE); HEIDEMANN, Silke, 12159 Berlin (DE); HENNIG, Annette, 15831 Mahlow (DE); KOPKA, Joachim, 10405 Berlin (DE)
(74) Vertreter: Krieger, Stephan Gerhard
(86) Internationale Anmeldenummer: PCT/EP2002/012552
(87) Internationale Veröffentlichungsnummer: WO 2003/041835

(56) Entgegenhaltungen:
- EP-A- 0 290 156
- US-A- 4 460 504
- US-A- 5 714 071
- O. FIEHN: "metabolite profiling for plant functional genomics" NATURE BIOTECHNOLOGY, Bd. 18, November 2000 (2000-11), Seiten 1157-1161, XP002226829 in der Anmeldung erwähnt
- DATABASE WPI Week 199602, 2. April 1994 (1994-04-02) Derwent Publications Ltd., London, GB; AN 1996-018389 XP002226716 LEE SUN JAE: "Extraction and purification flavonoid glycoside from ginkgo leaves" & KR 9 402 797 B (KOLON IND INC), 2. April 1994 (1994-04-02)
- DATABASE WPI Week 199545, 12. September 1995 (1995-09-12) Derwent Publications Ltd., London, GB; AN 1995-348315 XP002226717 UKAI SHIGEO: "new hyperglycaemic depress high depress action plus contain acidic hetero polysaccharide extract mushroom" & JP 07 238031 A (KAGOME KK), 12. September 1995 (1995-09-12)
- FIEHN O. ET AL: 'L. Identification of uncommon plant metabolites based on calculation of elemental compositions unsig gas chromatographiy and quadrupole mass spectometometry.' ANALYTICAL CHEMISTRY, [Online] Bd. 72, 2000, Seiten 3573 - 3580 Gefunden im Internet: <URL:http://pubs.acs.org/cgi-bin/archive.cg i/ancham/2000/72/i15/pdf/ac991142i.pdf>

## Beschreibung

Die vorliegende Erfindung betrifft ein Verfahren zur Isolation von Inhaltsstoffen aus organischem Material, das folgende Verfahrensschritte umfasst:
(a) Gefriertrocknen des organischen Materials;
(b) Extrahieren der Inhaltsstoffe mit einem polaren Lösungsmittel oder Lösungsmittelgemisch (A) und einem organischen Lösungsmittel oder Lösungsmittelgemisch (B), wobei die vereinigten Extrakte aus dem Extrahieren mit (A) und (B) eine Phase bilden können und wobei das Lösungsmittel oder Lösungsmittelgemisch (B) unpolarer ist als das Lösungsmittel oder Lösungsmittelgemisch (A);
(c) Vereinen der Extrakte aus dem Extrahieren mit (A) und (B) zu einer Phase und folgendes Trennen in eine polare und eine unpolare Phase; und
(d) Durchführen einer Veresterung/Umesterung in der unpolaren Phase mit einem Alkohol, wobei die Veresterung/Umesterung in Gegenwart einer flüchtigen Säure durchgeführt wird;
wobei das Verfahren ein Hochdurchsatzverfahren ist.

Das Verständnis der biochemischen Synthesewege im Metabolismus von tierischen oder pflanzlichen Zellen, einschließlich Mikroorganismen, wie Bakterien, Pilze, Algen, oder Säugetierzellen, ist trotz Kenntnis der Hauptsynthesewege noch sehr rudimentär. Die Bestimmung von physiologischen Zuständen während Wachstum, Entwicklung oder als Reaktion auf Umweltstress ist bis heute im wesentlichen auf die Untersuchung einzelner Zielmoleküle, wie z.B. RNA und Proteine, beschränkt. Änderungen des mRNA- oder Proteinlevels oder deren Aktivität können jedoch häufig nicht mit Änderungen im Stoffwechsel oder gar mit phänotypischen Funktionen korreliert werden.

Die direkte Analyse von zellulären Inhaltsstoffen oder Metaboliten erfolgt häufig entweder durch spezifische enzymatische Reaktionen, Immunoassays oder auf der Grundlage von chromatographischen Verfahren, die anhand von Retentionszeiten oder Koelutionen mit Referenzsubstanzen bestimmte Stoffe identifizieren. Wie in Katona, J. Chromatography 1999, 847, 91-102 beschrieben, behandelt ein Großteil des Stands der Technik nur die Analyse von wenigen, spezifischen Komponenten, z.B. Säuren oder Zucker.

Erst in Anfängen ist gezeigt, dass Stoffwechselprodukte oder Metaboliten nicht nur Zwischen- oder Endprodukte darstellen, sondern auch als Sensoren und Regulatoren wirken. Der Analyse komplexer metabolischer Profile oder von Inhaltsstoffen in Organismen kommt daher eine große Bedeutung bei der Zuordnung von Genfunktionen, bei der Beurteilung von Stresseinflüssen und nicht zuletzt bei der Beurteilung von Sicherheit und Wert von genetisch veränderten Organismen zu.

Um diese Beziehungen jedoch untersuchen zu können, ist es in der Regel notwendig, organische Systeme unter unterschiedlichen Bedingungen möglichst detailliert und reproduzierbar zu untersuchen, so dass z.B. genetische Variabilitäten oder verschiedene interne oder externe Einflüsse erkannt werden können. Dies erfordert jedoch zwangsläufig eine Analyse einer großen Anzahl an Proben.

Am meisten fortgeschritten ist die Bestimmung von komplexen Metaboliten-Profilen (unabhängig davon, ob sich diese Bestimmung auf verschiedene Substanzklassen, Entwicklungsstufen oder Materialtypen beschränkt, d.h. unabhängig davon ob es sich um ein Metabolic Fingerprinting, Metabolic Profiling oder Metabolomics handelt) in diagnostischen Screens, jedoch wurden kürzlich auch erste Profile von Pflanzen beschrieben (für eine Übersicht s. Trethewey, Curr. Opin. Plant. Biol. 1999, 2, 83-85).
So zeigt Sauter (ACS Symposium Series 1991, 443 (Synth. Chem. Agrochem. 2), American Chemical Society, Washington, DC, 288-299) die Veränderung von Inhaltsstoffen in Gerste nach Behandlung mit verschiedenen Herbiziden. Zwischen 100 und 200 Signale konnten detektiert werden und mit Hilfe von Referenzsubstanzen über ihre Retentionskoeffizienten in der Gaschromatographie (GC) oder über Gaschromatographie-Massenspektrometrie-Analyse (GC/MS) identifiziert werden.

Fiehn, Nature Biotechnology 2000, 18, 1157-1161, beschreibt die Quantifizierung von 326 Substanzen in Arabidopsis thaliana Blattextrakten. Für den Vergleich von vier verschiedenen Genotypen wurden in einem aufwendigen Verfahren gefrorene Pflanzenproben homogenisiert, in 97 Vol.-% Methanol extrahiert und nach Zugabe von Chloroform und Wasser in mehreren Schritten eine polare und eine unpolare Phase gewonnen, die dann per LC/MS und GC/MS analysiert wurden (s.a. Fiehn, Anal. Chem. 2000, 72, 3573-3580; http://www.mpimp-golm.mpg.de/fiehn/blatt-protokoll-e.html). Nach einem sehr ähnlichen Verfahren werden von Roessner, The Plant Journal 2000, 23, 131-142, Pflanzeninhaltsstoffe in Methanol extrahiert und die Profile polarer Metaboliten von *in vitro* und von in Erde gezogenen Kartoffelpflanzen miteinander verglichen.

Gilmour, Plant Physiology 2000, 124, 1854-1865 extrahiert Zucker aus lyophilisierten Blättern von fünf verschiedenen Arabidopsisarten in 80 % Ethanol nach Inkubation für 15 min bei 80°C und Inkubation über Nacht bei 4°C. Ebenfalls bei 80°C, für 30 min und in 80 % Ethanol mit Hepes, pH 7,5, extrahiert Strand, Plant Physiology 1999, 119, 1387-1397, zwei mal nacheinander lösliche Zucker und Stärke. Bei dieser hohen Temperatur wird dann noch zweimal extrahiert, um das Extraktionsergebnis zu verbessern, und zwar einmal mit 50 % Ethanol-Hepes, pH 7,5 und einmal mit Hepes, pH 7,5.

Die im Stand der Technik beschriebenen Verfahren lassen nur eine beschränkte Automatisierung zu, die zudem nur mit einem hohen technischen Aufwand zu verwirklichen ist. Insbesondere die Erfassung großer Probenzahlen, die Bestimmung des Einflusses von vielfältigen Stressfaktoren auf den Metabolismus der Organismen oder die Beobachtung dynamischer Prozesse, die eine kontinuierliche Analyse von Proben in häufig sehr kleinen Zeitfenstern erfordert, bedingen Verfahren,
(a) die schnell sind, d.h. beispielsweise, dass die Probenfixierung und -analyse innerhalb einer kurzen Zeitspanne nach der Probengewinnung erfolgt,
(b) die hochreproduzierbar sind, d.h. beispielsweise, dass eine Analyse über viele verschiedene Proben Ergebnisse innerhalb einer geringen Fehlerbreite liefert,
(c) die einfach zu handhaben sind, d.h. beispielsweise, dass das Verfahren automatisierbar und ohne hohen technischen oder personellen Aufwand betreibbar ist,
(d) die offen sind, d.h. beispielsweise, dass eine große Anzahl an Substanzen analysierbar ist, und/oder
(e) die sensitiv sind, d.h. beispielsweise, dass die Analyse auch geringe Änderungen in Substanzkonzentrationen und geringe Substanzmengen erfasst.

Bei einer größeren Anzahl an Proben ist es besonders erforderlich, dass die Stabilität der Proben und somit die Reproduzierbarkeit der Ergebnisse gewährleistet wird. Eine umfassende kontinuierliche Analyse von biologischem Material, z.B. tierische Proben oder Pflanzenproben, oder z.B. die Wechselwirkung zwischen Substanz(en) und Organismen in komplexen Systemen und ihr zeitlicher Verlauf ist somit mit den im Stand der Technik bekannten Verfahren nicht möglich.

Das technische Problem, das der vorliegenden Erfindung zugrunde lag, war daher, ein Verfahren zu finden, das es erlaubt, die oben genannten Nachteile der im Stand der Technik bekannten Verfahren zu überwinden und das es ermöglicht, insbesondere eine größere Anzahl an Proben mit einer hohen Sensitivität und Reproduzierbarkeit schnell und einfach zu analysieren.

Die Lösung des Problems wird durch die in den Ansprüchen der vorliegenden Erfindung charakterisierten Ausführungsformen zur Verfügung gestellt.

Folglich betrifft die Anmeldung ein Verfahren zur Isolation von Inhaltsstoffen aus organischem Material, das folgende Verfahrensschritte umfasst:
(a) Gefriertrocknen des organischen Materials;
(b) Extrahieren der Inhaltsstoffe mit einem polaren Lösungsmittel oder Lösungsmittelgemisch (A) und einem organischen Lösungsmittel oder Lösungsmittelgemisch (B), wobei die vereinigten Extrakte aus dem Extrahieren mit (A) und (B) eine Phase bilden können und wobei das Lösungsmittel oder Lösungsmittelgemisch (B) unpolarer ist als das Lösungsmittel oder Lösungsmittelgemisch (A);
(c) Vereinen der Extrakte aus dem Extrahieren mit (A) und (B) zu einer Phase und folgendes Trennen in eine polare und eine unpolare Phase; und
(d) Durchführen einer Veresterung/Umesterung in der unpolaren Phase mit einem Alkohol, wobei die Veresterung/Umesterung in Gegenwart einer flüchtigen Säure durchgeführt wird;
wobei das Verfahren ein Hochdurchsatzverfahren ist.

Unter dem Begriff "organisches Material" wird jedes organische oder biologische Material verstanden, wie Material von Pflanzen, Tieren, Mikroorganismen, beispielsweise von Protisten, Pilzen, Bakterien, Algen, Viren etc., z.B. aus Kulturmaterial abgetrennte Organismen, Körperflüssigkeiten wie Blut, Lymphe, Sekrete oder Nahrungsmittel, Futtermittel und sonstige tierische oder pflanzliche Erzeugnisse. Ebenso wird darunter Kulturmaterial verstanden, in dem Organismen leben, d.h. bspw. auch nach Abtrennung der Organismen, z.B. Medien zur Aufzucht von Mikroorganismen, wie Protisten, z.B. Kinetoplasten, Plasmodien, oder Bakterien, z.B. gram positiven oder gram negativen Bakterien, oder Algen, Pilzen, z.B. Hefen, oder tierischen oder pflanzlichen Zellen.

Unter dem Begriff "Extraktion" oder "Extrahieren" wird erfindungsgemäß verstanden, dass aus einer festen oder flüssigen Probe mit unpolaren bis polaren Lösungsmitteln oder Lösungsmittelgemischen die darin enthaltenen Substanzen, z.B. Inhaltsstoffe aus organischem Material, in das jeweilige Lösungsmittel oder Lösungsmittelgemisch überführt werden. In einem polaren Lösungsmittel wie z.B. Wasser, lösen sich die hydrophilen Inhaltsstoffe, z.B. auch Metaboliten, in einem lipophilen Lösungsmittel werden die hydrophoben Inhaltsstoffe, z.B. auch Metaboliten, des Materials gelöst.

Unter "polaren Lösungsmitteln oder Lösungsmittelgemischen" wird ein Lösungsmittel oder Lösungsmittelgemisch mit einem Polaritätsindex von 4 bis 10,2, vorzugsweise von 5 bis 7, mehr bevorzugt von 5,5 bis 6,5 nach Kellner, Analytical Chemistry, Weinheim, 1998, S. 195, verstanden. Polare Lösungsmittel sind z.B. Wasser, inklusive wässrige Lösungen, oder polare aprotische oder protische organische Lösungsmittel, bspw. Alkylalkohole mit einem Alkylrest mit 1 bis 6 Kohlenstoffatomen, z.B. Methanol, Ethanol, 1-Propanol, 2-Propanol, Butanol, Pentanol, Hexanol oder z.B. Aceton, Acetonitril, Essigsäureethylester, Dimethylsulfoxid öder N,N-Dimethylformamid, oder andere Lösungsmittel mit einer Polarität größer als oder gleich 0,50, wie z.B. angegeben in Küster/Thiel, Rechentafeln für die Chemische Analytik, Walter de Gruyter, Berlin/New York 1993, S. 359, oder sind Gemische davon. Ein erfindungsgemäß eingesetztes Lösungsmittelgemisch aus 80 % Methanol/20 % Wasser hat so z.B. den Polaritätsindex von 6,1 gemäß Kellner, 1998.

Unter einem "unpolarem Lösungsmittel" oder "unpolarem Lösungsmittelgemisch" wird ein Lösungsmittel oder Lösungsmittelgemisch verstanden, das eine geringere Polarität oder einen geringeren Polaritätsindex aufweist als Lösungsmittel oder Lösungsmittelgemisch (A) und in der sich mittel- bis unpolare Stoffe besser extrahieren lassen, insbesondere Lösungsmittel oder Lösungsmittelgemisch mit einem Polaritätsindex nach Kellner, Analytical Chemistry, Weinheim, 1998, S. 195, der 0,3 oder mehr kleiner ist als der des Extraktionsmittels der polaren Phase. Mehr bevorzugt ist der Polaritätsindex nach Kellner, 1998 0,5, noch mehr bevorzugt 1, am meisten bevorzugt um mehr als 2 kleiner als der des Extraktionsmittels der polaren Phase. Folglich hat der Polaritätsindex des unpolaren Lösungsmittels besonders bevorzugt einen Wert von 5,5 bis 1, mehr bevorzugt 5 bis 2, am meisten bevorzugt 4,5 bis 3,5 nach Kellner, 1998. Ein erfindungsgemäß eingesetztes Lösungsmittelgemisch aus 40 % Methanol/60 % Dichlormethan hat so z.B. einen Polaritätsindex von 3,9 nach Kellner, 1998. "Unpolare Lösungsmittel" sind z.B. organische Lösungsmittel, bspw. halogenhaltige Lösungsmittel wie Chloroform, Dichlormethan, Tetrachlorkohlenstoff oder aliphatische Lösungsmittel wie Hexan, Cyclohexan, Pentan, Heptan etc. oder aromatische Lösungsmittel, wie z.B. Toluol oder Benzol, oder Ether, wie z.B. tert.-Butylmethylether, Diethylether oder Tetrahydrofuran oder andere Lösungsmittel mit einer Polarität kleiner als 0,50, wie z.B. angegeben in Küster/Thiel 1993, oder Gemische davon.

Unter einer "polaren Phase" oder einem "polaren Extrakt" wird eine Phase oder ein Extrakt verstanden, die/der aus einer Extraktion mit einem Lösungsmittel oder Lösungsmittelgemisch mit einem Polaritätsindex von 4 bis 10,2, vorzugsweise von 5 bis 7, mehr bevorzugt von 5,5 bis 6,5 nach Kellner, Analytical Chemistry, Weinheim, 1998, S. 195, erhalten wird, oder die/der aus einer Extraktion mit einem polaren Lösungsmittel oder Lösungsmittelgemisch wie oben genannt erhalten wird.

Unter einer "unpolaren Phase" oder einem "unpolaren Extrakt" wird eine Phase oder ein Extrakt verstanden, die/der relativ zu der polaren Phase eine geringere Polarität oder einen geringeren Polaritätsindex aufweist und in der/dem sich mittel- bis unpolare Stoffe besser extrahieren lassen, wie z.B. bei einer Extraktion mit unpolaren Lösungsmitteln oder Lösungsmittelgemischen wie oben genannt. Erfindungsgemäß wird eine "unpolare Phase" oder ein "unpolarer Extrakt" erhalten durch Extraktion mit einem Lösungsmittel oder Lösungsmittelgemisch mit einem Polaritätsindex nach Kellner, Analytical Chemistry, Weinheim, 1998, S. 195, der 0,3 oder mehr kleiner ist als der des Extraktionsmittels der polaren Phase/des polaren Extraktes. Mehr bevorzugt ist der Polaritätsindex nach Kellner, 1998 0,5, noch mehr bevorzugt 1, am meisten bevorzugt um mehr als 2 kleiner als der des Extraktionsmittels der polaren Phase.

Unter dem Begriff "Inhaltsstoffe" werden polare und unpolare Verbindungen, z.B. "Metaboliten" verstanden, die bei den Abbau- und Aufbaureaktionen (katabolischen oder anabolischen Reaktionen) des Stoffwechsels entstehen oder von Organismen aus ihrer Umgebung aufgenommen werden. Dies betrifft Verbindungen, die zellulär oder in komplexeren Organismen auch extrazellulär, z.B. in Körperflüssigkeiten vorliegen. Bei der Kultur von Mikroorganismen oder anderen Organismen sind auch die Inhaltsstoffe dieser Kulturen, z.B. des Wachstumsmediums, umfasst. Die Konzentration eines Inhaltsstoffes wird durch äußere Einflüsse (Umgebungsbedingungen, Nährstoffbedingungen, Stresssituation) oder durch interne Bedingungen (Entwicklung, Regulationen, genetisch bedingte Veränderungen), denen die Organismen unterliegen, beeinflusst. Der Begriff umfasst sowohl sogenannte Primärmetaboliten als auch Sekundärmetaboliten. Unter "Primärmetaboliten" werden in der Regel solche Metaboliten verstanden, die Produkte von Abbau- und Aufbauwegen sind, die von fundamentaler Bedeutung für die Zelle sind und damit mehr oder weniger für alle Zellen gleich sind. Unter "Sekundärmetaboliten" werden in der Regel Verbindungen verstanden, die zumeist auf Nebenwegen, z.B. bei Stresssituationen, wie Hunger- oder Mangelbedingungen oder nach Abschluss der aktiven Wachstumsphase der Zelle gebildet werden und für die in vielen Fällen keine erkennbare Funktion für die Zelle bekannt ist (s.a. Römpp Lexikon Biotechnologie, New York, 1992). Unter Inhaltsstoffen werden daher z.B. polare oder unpolare Substanzen verstanden, wie Kohlenhydrate, Amine (insbesondere Aminosäuren), Tetrapyrrole, Lipide, Steroide, Nukleotide, Nukleoside, Cofaktoren, Coenzyme, Vitamine, Antibiotika, Hormone, Peptide, Terpene, Alkaloide, Carotinoide, Xanthopylle, Flavoide, etc. und die Substanzen der jeweiligen Stofwechselwege, ohne dass die obige oder folgende Aufzählung in irgendeiner Form als limitierend anzusehen ist.

Kohlenhydrate umfassen z.B. die Kohlenhydrate des Kohlenhydrat-Stoffwechsels, z.B. der Glykolyse, der Gluconeogenese, z.B. Triosen, Tetrosen, Pentosen, z.B. Furanosen oder Hexosen, z.B. Pyranosen oder Heptosen, des Polysaccharidstoffwechsels, oder des Pyruvatstoffwechsels, des Acetyl-Coenzym-A-Stoffwechsels, Di- oder Oligosaccharide, Glycoside, Hexosederivate,Desoxy-Hexosen, Kohlenhydrate des Pentosestoffwechsels, des Aminozuckerstoffwechsels, des Citrat-Zyklus des Glyoxylat-Stoffwechsels etc. oder andere Substanzen der jeweiligen Stoffwechselwege.

Aminosäuren umfassen z.B. die Aminosäuren der Aminosäuren-Stoffwechsel, wie z.B. im Ammoniakstoffwechsel, oder des Schwefelstoffwechsels, des Harnstoffzyklus, oder deren Derivate, z.B. aromatische oder nicht-aromatische Aminosäuren, polare ungeladene, nicht polare, aliphatische, aromatische, positiv geladene, negativ geladene Aminosäuren, verzweigtkettige oder unverzweigtkettige, essentielle oder nicht essentielle Aminosäuren oder andere Substanzen der jeweiligen Stoffwechselwege.

Tetrapyrrole umfassen z.B. Substanzen des Protoporphyrin-Stoffwechsels, des Hämoglobin-Stoffwechsels, des Myoglobin-Stoffwechsels, der verschiedenen Cytochrom-Stoffwechsel, der Photosynthesestoffwechsel etc. oder andere Substanzen der jeweiligen Stoffwechselwege.

Lipide umfassen z.B. gesättigte oder ungesättigte, essentielle oder nicht essentielle Fettsäuren, Acyl-CoA-Verbindungen, Triacylglyceride, Lipide der Lipogenese oder der Lipolyse, Phospholipide, z.B. Glycerophospholipide, Etherlipide, Sphingophospholipide, Glycolipide oder die Substanzen der jeweiligen Stoffwechselwege.

Hormone umfassen Steroid- oder Nichtsteroidhormone, z.B. Peptidhormone oder z.B. Eicosanoide.

Steroide umfassen z.B. die Substanzen des Cholesterin-Stoffwechsels, Hopanoide, Pflanzensteroide, wie Phyto- und Mycosterine, Insektenhormone, Isoprenoide, Steroidhormone, Gestagene, Androgene, Östrogene, Corticosteroide oder die Substanzen der jeweiligen Stoffwechselwege.

Nucleotide und Nucleoside umfassen z.B. Desoxy- und Ribonucleotide/nucleoside, deren 5'-Phosphat-Derivate, Purine, Pyrimidine oder deren Derivate, z.B. cyclisierte, methylierte und/oder acetylierte Nucleosid- oder Nucleotid-Derivate, etc. oder andere Substanzen der jeweiligen Stoffwechselwege.

Umfasst sind ebenfalls Substanzen, die in diesen Stoffwechselwegen eine Rolle spielen. Unter "andere Substanzen der jeweiligen Stoffwechselwege" werden die jeweiligen Zwischenprodukte bei der Biosynthese, beim Umsatz, Transport oder Abbau der genannten Substanzen verstanden. Eine Übersicht über viele Metaboliten ist z.B. in Michal, Biochemical Pathways, Berlin, 1999 oder in KEGG, Kyoto Enzyclopedia of Genes and Genomes, Institute of Chemical Research at Kyoto University, Japan (z.B. http://www.genome.ad.jp/dbget/ligand.html) zu finden, die ausdrücklich hier mit aufgenommen sind.

Unter dem Begriff "Wasser" wird jede Art einer wässrigen Lösung verstanden, auch z.B. deionisiertes, demineralisiertes, destilliertes oder bidestilliertes Wasser. Es können auch eine oder mehr Substanzen in dem Wasser gelöst oder damit vermischt sein, die vorzugsweise die Extraktion, Stabilität oder Löslichkeit der Inhaltsstoffe des organischen Materials verbessern, oder zu bevorzugten Eigenschaften, z.B. pH-Wert, Leitfähigkeit, Salzkonzentration usw., wie z.B. in Salz- oder Pufferlösungen, führen.

Unter "flüchtige Säure" wird eine Säure verstanden, die durch Eindampfen im wesentlichen, d.h. zu mindestens 80 %, bevorzugt zu 90 %, mehr bevorzugt zu 95 % oder mehr, am meisten bevorzugt, vorzugsweise vollständig entfernt werden kann.

Das erfindungsgemäße Verfahren eignet sich besonders als Hochdurchsatzverfahren zur Extraktion von organischem Material und Derivatisierung und Analyse der Extrakte einer großen Anzahl an Proben, insbesondere an Pflanzenproben.

Die im Stand der Technik beschriebenen Verfahren erfordern das Einfrieren und mechanische Pulverisieren der tiefgefrorenen Proben, die Trennung der organischen Phase von der wässrigen Phase bei der Erstellung von Gesamtextrakten, die sowohl die lipophilen als auch die polaren Metaboliten umfassen und umfangreiche Waschschritte einer organischen Phase mit einer wässrigen Lösung zur Entfernung der Säure mit anschließender aufwendiger Wasserentfernung aus dem organischen Lösungsmittel sowie gegebenenfalls Filtration des Probenmaterials; Schritte, die zeitaufwendig und nur mit einem hohen technischen Aufwand automatisierbar sind, falls überhaupt (Fiehn, Anal. Chem. 2000 und Nature Biotechnology 2000). Erst das erfindungsgemäße Verfahren offenbart die wesentlichen Verfahrensschritte, die eine effiziente und umfassende Automatisierung erlauben, verbunden mit einer Beschleunigung des Verfahrens.

Vorteilhaft wird in dem erfindungsgemäßen Verfahren vermieden, dass bis zur Extraktion enzymatische Prozesse in den Proben ablaufen, die das Inhaltsstoffspektrum verändern und so Reproduzierbarkeit und Präzision der Messergebnisse leidet. Vorteilhaft ist daher besonders, dass in einem Verfahrensschritt das Material gefriergetrocknet wird. Durch die Gefriertrocknung wird dem Material das Wasser entzogen, so dass enzymatische Prozesse inhibiert werden. Der Einsatz der Gefriertrocknung ist zudem ökonomisch und ökologisch vorteilhaft, da die so bearbeiteten Proben bei Raumtemperatur aufbewahrt und weiterbehandelt werden können. Dies erlaubt nicht nur eine automatische Verarbeitung und Analyse der Probe auf technisch einfachere und verbilligte Art sondern spart Energiekosten, da auf einen ständigen Kühlkreislauf verzichtet werden kann.

Vorteilhaft ist zudem, dass in dem erfindungsgemäßen Verfahren die vereinigten Extrakte eine Phase bilden. Der Vorteil der nochmaligen einphasigen Durchmischung der beiden Extrakte vor der Phasentrennung ist, dass Reste polarer Stoffe aus der unpolaren Extraktion in die polare Phase und umgekehrt Reste unpolarer Verbindungen aus der polaren Phase in die entsprechende unpolare Phase übergehen. Dadurch wird die Empfindlichkeit, Genauigkeit, Präzision, Variabilität und Reproduzierbarkeit eines Hochdurchsatzverfahrens erhöht.

Die Extraktionen mit Lösungsmittel(gemisch) (A) und (B) führen nach Extraktion zu einer polaren Phase sowie einer unpolaren Phase, und können parallel, z.B. wenn die Probe zunächst geteilt wird und dann jeweils Extrakte hergestellt werden, oder hintereinander durchgeführt werden, z.B. wenn die selben Proben nach der Abtrennung des 1. Extraktionsmittels mit einem 2. Extraktionsmittel behandelt werden, wobei die Reihenfolge (A)(B) genauso möglich ist wie die Reihenfolge (B)(A), und wobei auch Zwischenschritte möglich sind. Ebenfalls möglich ist es, die Schritte mit anderen Schritten zu kombinieren. Am meisten bevorzugt ist die Reihenfolge (A)(B).

Die beiden Phasen können nach der Vereinigung der beiden Phasen zu einer Phase nach dem Fachmann bekannten Verfahren wieder in eine polare und eine unpolare Phase getrennt werden, siehe z.B. Bligh und Dyer, Can. J. Biochem. Physiol. 1959, 37, 911-917, beispielsweise durch die Zugabe eines unpolaren, insbesondere eines wie oben beschrieben unpolaren organischen (z.B. Dichlormethan) oder eines wie oben beschriebenen polaren Lösungsmittels oder Lösungsmittelgemisches, insbesondere einer wässrigen Lösung, z.B. eines Puffers, oder durch die Zugabe sowohl eines unpolaren als auch eines polaren Lösungsmittels oder Lösungsmittelgemisches. Vorzugsweise wird die Phasentrennung durch die Zugabe eines der für die Extraktion verwendeten Lösungsmittel erreicht, insbesondere durch Methanol, Dichlormethan und/oder Wasser.

Die Verwendung einer flüchtigen, vorzugsweise leicht flüchtigen Säure für die Veresterung/Umesterung in der polaren Phase, wie z.B. HCl, ist ein weiterer wesentlicher Schritt des erfindungsgemäßen Verfahrens. Erfindungsgemäß hat die verwendete Säure einen geringeren Dampfdruck als das verwendete Lösungsmittel oder die Komponenten des Lösungsmittelgemisches oder ein mögliches Azeotrop aus allen oder einem Teil der Komponenten einschließlich der Säure selbst. Im Gegensatz zum im Stand der Technik beschriebenen Verfahren ermöglicht die Verwendung von flüchtigen Säuren, dass durch Eindampfen die Säurereste schnell und automatisierbar entfernt werden können, während im Stand der Technik die Säurereste durch Waschschritte mit anschließender Trocknung, z.B. mit einem Trocknungsmittel wie Natriumsulfat, und Filtration entfernt werden müssen. Als Lösungsmittel kann für die Veresterung/Umesterung ein Alkylalkohol mit einem Alkylrest mit 1 bis 8 Kohlenstoffatomen eingesetzt werden, wie oben beschrieben, optional mit einem Anteil eines inerten Lösungsmittels oder Lösungsmittelgemisches, z.B. Chloroform, Dichlormethan, Benzol und/oder Toluol. Besonders bevorzugt ist eine Mischung aus Chloroform, Methanol, Toluol und Salzsäure.

Die Veresterung/Umsetzung kann in dem erfindungsgemäßen Verfahren in der polaren und/oder der unpolaren Phase der Extraktion durchgeführt werden. Bevorzugt wird die Veresterung/Umesterung nur in der unpolaren Phase durchgeführt. Vorzugsweise wird die erfindungsgemäße Veresterung/Umesterung der Inhaltsstoffe oder eines Teils der Inhaltsstoffe, die extrahiert wurden, durchgeführt mit einem ungesättigten oder gesättigten geradkettig, verzweigtkettigen oder ringförmigen Alkylalkohol mit 1 bis 8 Kohlenstoffatomen, z.B. Methanol, Ethanol, 1-Propanol, 2-Propanol, Butanol, Pentanol, Hexanol etc. Bevorzugt ist Methanol oder Ethanol, am meisten bevorzugt Methanol. Die Reaktionstemperatur ist vorzugsweise zwischen 70 und 150°C, mehr bevorzugt zwischen 90 und 120°C, am meisten bevorzugt sind 100°C. Die Reaktionszeit liegt bevorzugt zwischen 0,5 h und 4 h, mehr bevorzugt zwischen 1 h und 3 h. Es können weitere Lösungsmittel, die in der Reaktion inert sind, zugegen sein, z.B. Toluol, Dichlormethan, Benzol und/oder Chloroform. Es können auch Mischungen der Alkohole und/oder inerten Lösungsmittel verwendet werden. Die Lösung kann auch 0 Vol.-% bis 20 Vol.-% Wasser enthalten, vorzugsweise weniger als 10 Vol.-%, mehr bevorzugt ist weniger als 5 Vol.-%. Vorzugsweise ist der Anteil an anderen Lösungsmitteln außer den genannten Alkoholen 0 Vol.-% bis 20 Vol.-%, vorzugsweise unter 10 Vol.-%, am meisten bevorzugt 0 Vol.-%.

Erfindungsgemäß wird die Veresterung/Umesterung mit einer flüchtigen Säure durchgeführt.

Die im Stand der Technik beschriebenen Verfahren eignen sich nicht oder nur beschränkt zu einer Hochdurchsatzextraktion von Metaboliten aus organischem Material. Bekannte diagnostische Extraktionen betreffen in erster Linie Untersuchungen von Flüssigkeiten, z.B. Urin, so dass diese Verfahren nicht für die Aufbereitung von festen Proben, insbesondere von Proben aus Pflanzenzellen, geeignet sind.

Das erfindungsgemäße Verfahren ist für den Hochdurchsatz und den Einsatz von Robotik optimiert, der Anteil der manuellen Arbeiten ist gegenüber dem Stand der Technik, insbesondere gegenüber Verfahren, die die Schritte (a) bis (d) zum Teil oder gar nicht in dieser Form aufweisen, um mindestens 10 %, vorzugsweise 20 %, mehr bevorzugt um mehr als 30 %, am meisten bevorzugt um mindestens 50 % reduziert.

Vorteilhafterweise wird durch das erfindungsgemäße Verfahren und die dadurch bedingte Möglichkeit zur Automatisierung und Robotik die Probenverwechslungsrate um mehr als 10 %, mehr bevorzugt um mehr als 20 %, noch mehr bevorzugt um mehr als 30 %, am meisten bevorzugt um mehr als 50 % gegenüber dem Stand der Technik, insbesondere gegenüber Verfahren, die die Schritte (a) bis (d) zum Teil oder gar nicht in dieser Form aufweisen, reduziert. Ebenso erreicht man durch die erfindungsgemäßen Verfahrensschritte in einer Hochdurchsatzanalyse eine wesentlich erhöhte Reproduzierbarkeit. Die erhöhte Reproduzierbarkeit des erfindungsgemäßen Verfahrens ist durch die um mindestens 10 %, vorzugsweise 20 %, mehr bevorzugt mindestens 30 % am meisten bevorzugt mindestens 50 % geringere analytische Variabilität gegenüber dem Stand der Technik, insbesondere gegenüber Verfahren, die die Schritte (a) bis (d) zum Teil oder gar nicht in dieser Form aufweisen, gekennzeichnet. Vorteilhaft ist zudem, dass durch die hierin beschriebenen Ausführungsformen des erfindungsgemäßen Verfahrens ein um mehr als 5 %, vorzugsweise um 10 %, mehr bevorzugt um 20 %, noch mehr bevorzugt um 50 % vergrößertes Spektrum an Inhaltsstoffen gegenüber dem Stand der Technik, insbesondere gegenüber Verfahren, die die Schritte (a) bis (d) zum Teil oder gar nicht in dieser Form aufweisen, erfasst wird.

Vorzugsweise ist das Gemisch (A) ein Alkohol/Wasser-Gemisch mit 10 Vol.-% oder weniger, vorzugsweise 0 Vol.-% anderer Lösungsmittel oder Lösungsmittelgemische.

Polare Substanzen werden im Stand der Technik in der Regel in reinen oder mit Wasser oder Pufferlösungen gemischten Alkylalkoholen wie Ethanol (Sauter, 1991, Strand, 1999, Gilmour, 2000) oder Methanol (Fiehn, Anal. Chem. 2000 und Nature Biotechnology 2000, Roessner, 2000) oder in Wasser oder Pufferlösungen extrahiert.

Sehr gute Extraktionseigenschaften für polare Substanzen hat Wasser. Nachteilig ist jedoch, dass in wässrigen Lösungen zelluläre Prozesse, die in der Regel zuvor durch Einfrieren oder Gefriertrocknen gestoppt wurden, wieder aktiviert werden. Dies kann z.B. einen enzymatischen Ab- oder Umbau verschiedener Metaboliten bewirken und führt zu einer Veränderung und somit Verfälschung der Konzentrationen oder Verhältnisse innerhalb dieser Extrakte. In der Regel wird versucht, diese unerwünschten Nebenreaktionen durch Arbeiten auf Eis zu unterbinden. Dies hat jedoch sowohl für die Extraktionseffizienz, als auch für die Aufarbeitung großer Probenzahlen erhebliche Nachteile. Sensitivitätsverlust und Abweichung vom tatsächlichen zellulären Zustand zum Zeitpunkt der Ernte sind unvermeidlich.

Ethanol oder Methanol werden verwendet, weil sie zum einen polare Eigenschaften haben, und somit hydrophile Inhaltsstoffe ausreichend extrahiert werden, zum anderen, weil nach Zugabe zu einem Zellextrakt aufgrund des toxischen, denaturierenden Effekts des Alkohols die Zellextrakte in ihrer Aktivität inhibiert werden. Somit kann keine weitere Umsetzung der Metaboliten erfolgen und die Zellen werden in ihrem augenblicklichen metabolischen Stadium "eingefroren". Nachteilig ist jedoch, dass einige polare Metabolitenklassen nur schlecht in Methanol oder Ethanol löslich sind. Dies führt zu einem Verlust an Sensitivität und kann auch die Reproduzierbarkeit der Ergebnisse beeinflussen.

Bevorzugt ist die Verwendung von Methanol oder Ethanol als Alkylalkohol, mehr bevorzugt die Verwendung von Methanol. Vorzugsweise hat das Gemisch einen Polaritätsindex von 4 bis 10,2, besonders bevorzugt von 5 bis 7, am meisten bevorzugt von 5,5 bis 6,5 nach Kellner, 1998.

In einer besonders bevorzugten Ausführungsform besteht das polare Lösungsmittelgemisch (A) aus einem einphasigen Gemisch aus 50 bis 90 Vol.-% C₁- bis C₆-Alkylalkohol, z.B. Methanol, Ethanol, 1-Propanol, 2-Propanol, Butanol, Pentanol oder Hexanol und 10 bis 50 Vol.-% Wasser.

In einer besonders bevorzugen Ausführungsform besteht das erfindungsgemäße einphasige Gemisch aus mindestens 50 Vol.-% Methanol, 10 Vol.-% bis zu 50 Vol.-% Wasser, vorzugsweise nur aus Methanol und/oder Wasser, wobei das Gemisch nicht mehr als 50 Vol.-% Wasser enthält. Dieser Schritt des erfindungsgemäßen Verfahrens führt zu einer höheren Ausbeute als bei einer Extraktion in reinem Methanol oder Ethanol. Weiterhin ist die Stabilität des Extrakts gegenüber einer reinen Extraktion in Wasser erhöht und somit die Reproduzierbarkeit des Verfahrens wesentlich verbessert. Im Gegensatz zu der Extraktion mit Ethanol/Wasser-Gemischen ist die Ausbeute so hoch, dass ein einzelner Extraktionsschritt ausreicht; um eine sehr große Anzahl an Inhaltsstoffen zu isolieren. In Verfahren, denen der erfindungsgemäße Extraktionsschritt für die Isolation von polaren Substanzen aus Pflanzenzellen zugrunde lag, wurde die Anzahl der analysierten Substanzen nur vom Analyseverfahren limitiert. Es konnte eine sehr hohe Reproduzierbarkeit erreicht werden.

Vorzugsweise hat das Gemisch einen Anteil von mindestens 70 Vol.-% bis 90 Vol.-% Methanol, mehr bevorzugt sind 75 Vol.-% bis 85 Vol.-%, am meisten bevorzugt sind 80 Vol.-% Methanol. Ebenfalls bevorzugt sind 10 Vol.-% bis 50 Vol.-% Wasser. Mehr bevorzugt sind weniger als 40 Vol.-% Wasser, noch mehr bevorzugt weniger als 30 Vol.-% Wasser. Am meisten bevorzugt sind 15 Vol.-% bis 25 Vol.-% Wasser. Folglich wird das erfindungsgemäße Verfahren bevorzugt mit einem Gemisch aus 80 Vol.-% Methanol und 20 Vol.-% Wasser durchgeführt. Gegebenenfalls kann das Gemisch auch geringe Mengen eines anderen Lösungsmittels oder Lösungsmittelgemisches enthalten, z.B. Dichlormethan, bevorzugt sind jedoch weniger als 10 Vol.-%, mehr bevorzugt sind weniger als 5 Vol.-%, am meisten bevorzugt ist kein anderes Lösungsmittel in dem Gemisch.
Das Lösungsmittel oder Lösungsmittelgemisch (B) ist erfindungsgemäß ein organisches Lösungsmittel oder ein Gemisch aus einem oder mehr polaren Lösungsmitteln, bspw. Alkylalkoholen mit einem Alkylrest mit 1 bis 6 Kohlenstoffatomen, z.B. Methanol, Ethanol, 1-Propanol, 2-Propanol, Butanol, Pentanol, Hexanol oder z.B. Aceton, Acetonitril, Essigsäureethylester, Dimethylsulfoxid oder N,N-Dimethylformamid, oder anderen Lösungsmitteln mit einer Polarität größer als oder gleich 0,50, wie z.B. angegeben in Küster/Thiel 1993, und einem oder mehr oben beschriebenen unpolaren organischen Lösungsmitteln, bspw. halogenhaltigen Lösungsmitteln wie Chloroform, Dichlormethan, Tetrachlorkohlenstoff oder aliphatischen Lösungsmitteln wie Hexan, Cyclohexan, Pentan, Heptan etc. oder aromatischen Lösungsmitteln, wie z.B. Toluol oder Benzol, oder Ether, wie z.B. tert.-Butylmethylether, Diethylether oder Tetrahydrofuran oder anderen Lösungsmitteln mit einer Polarität kleiner als 0,50, wie z.B. angegeben in Küster/Thiel 1993.

Das Lösungsmittel oder Lösungsmittelgemisch (B) ist unpolarer als das Lösungsmittel oder Lösungsmittelgemisch (A). Erfindungsgemäß ist der Polaritätsindex (nach Kellner, 1998) von (B) um 0,3 oder mehr kleiner als der des Extraktionsmittels der polaren Phase.
Mehr bevorzugt ist der Polaritätsindex nach Kellner, 1998, 0,5, noch mehr bevorzugt 1, am meisten bevorzugt um mehr als 2 kleiner als der des Extraktionsmittels der polaren Phase. Vorzugsweise hat der Polaritätsindex des unpolaren Lösungsmittels einen Wert von 1 bis 5,5, mehr bevorzugt 5, am meisten bevorzugt weniger als 4,5 nach Kellner, 1998. Ein erfindungsgemäß eingesetztes Lösungsmittelgemisch aus 40 % Methanol/60 % Dichlormethan hat so z.B. einen Polaritätsindex von 3,9 nach Kellner, 1998.

Bevorzugt umfasst das genannte Gemisch eine Lösungsmittelkomponente, die sich nicht mit Wasser mischt, damit bei einer folgenden Phasenvereinigung anschließend die Phasentrennung in eine unpolare und eine polare Phase herbeigeführt werden kann. Bevorzugt mischt sich die Komponente mit einem C₁- bis C₆-Alkohol, insbesondere Ethanol oder Methanol. Die halogenierten Lösungsmittel sind besonders bevorzugt. Ein niedriger Siedepunkt, beispielsweise von unter 100°C, mehr bevorzugt unter 80°C, noch mehr bevorzugt unter 60°C und am meisten bevorzugt unter 40°C bei Normaldruck ist weiterhin von Vorteil, weil dann das Entfernen des Lösungsmittels oder Lösungsmittelgemisches schneller und bei niedrigeren Temperaturen schonender für die Inhaltsstoffe durchgeführt werden kann. Bevorzugt ist ein Gemisch aus Methanol oder Ethanol und Chloroform, Pentan, Hexan, Heptan, Cyclohexan, Tetrachlorkohlenstoff, Ethylacetat oder Dichlormethan. Mehr bevorzugt ist ein Gemisch aus Methanol oder Ethanol mit Chloroform oder Dichlormethan.

Besonders bevorzugt besteht das Lösungsmittelgemisch (B) aus einem einphasigen Gemisch aus 30 Vol.-% bis 60 Vol.-% C₁- bis C₆-Alkylalkohol, wie oben erwähnt, 40 Vol.-% bis 70 Vol.-% Chloroform oder Dichlormethan und 0 Vol.-% bis 30 Vol.-% eines weiteren Lösungsmittels oder Lösungsmittelgemisches, vorzugsweise Methanol und/oder Chloroform und/oder Dichlormethan, wobei die genannten Anteile an Alkylalkohol und/oder Dichlormethan und/oder Chloroform nicht über- oder unterschritten werden. Vorzugsweise ist der Alkylalkohol Methanol oder Ethanol, besonders bevorzugt Methanol.

Vorzugsweise ist das unpolare Lösungsmittel Dichlormethan oder Chloroform, bevorzugt ist die Verwendung von Dichlormethan.

Die 0 Vol.-% bis 30 Vol.-% des weiteren Lösungsmittels oder Lösungsmittelgemisches bestehen aus einem oder mehreren weiteren Lösungsmitteln, die mit dem oben genannten Gemisch eine Phase bilden. Gegebenenfalls kann das Gemisch (B) auch geringe Mengen Wasser enthalten, vorzugsweise weniger als 20 Vol.-%, mehr bevorzugt weniger als 10 Vol.-%, noch mehr bevorzugt weniger als 5 Vol.-%, am meisten bevorzugt ist kein Wasser oder anderes Lösungsmittel in dem Gemisch.

Überraschenderweise wurde gefunden, dass eine besonders gute Extraktion mit einem bestimmten Verhältnis an Methanol und Dichlormethan möglich ist. Am meisten bevorzugt wird das erfindungsgemäße Verfahren in Schritt (b) daher mit einem Gemisch aus 30 bis 40 Vol.-% Methanol und 60 bis 70 Vol.-% Dichlormethan durchgeführt. Am meisten bevorzugt sind 40 Vol.-% Methanol und 60 Vol.-% Dichlormethan.

Ein erfindungsgemäßes einphasiges Gemisch der Extrakte (A) und (B) wird z.B. erreicht, wenn das Lösungsmittelgemisch (A) aus 80 Vol.-% Methanol und 20 Vol.-% Wasser und das Lösungsmittelgemisch (B) aus 40 Vol.-% Methanol und 60 Vol.-% Dichlormethan besteht und dann beide Extrakte kombiniert werden. Vorteilhafterweise befinden sich somit alle Inhaltsstoffe und optional z.B. die Standards in einer Phase.

Gegebenenfalls kann die Extraktion mit (A) oder (B) ein- oder mehrmals wiederholt werden. Bevorzugt ist jedoch eine einmalige Durchführung eines jeden Extraktionsschritts.

Statt oder nach einer Phasentrennung kann in dem erfindungsgemäßen Verfahren eine Fraktionierung in zwei oder mehrere Fraktionen auch mittels einer Festphasenextraktion durchgeführt werden. Eine Fraktionierung in mehrere Fraktionen hat den Vorteil, dass die Derivatisierungs- und Analyseverfahren besser an die jeweiligen Substanzgruppen angepasst werden können. So werden insbesondere Fraktionen, die hauptsächlich Triglyceride enthalten, vor der Analyse z.B. zu Methylestern umgeestert. Die Festphasenextraktion eignet sich besonders gut zur Automatisierung.

Gegebenenfalls kann die Aufarbeitung der Extrakte an irgendeinem Punkt des hierin beschriebenen Verfahrens zwischen den genannten Schritten unterbrochen werden, solange die Extrakte stabil gelagert oder konserviert werden, z.B. indem die Extrakte tiefgefroren und/oder gefriergetrocknet werden. Bevorzugt ist jedoch, eine Unterbrechung der Aufarbeitung vor der Analyse zu vermeiden.

In einer Ausführungsform der Erfindung wird die Extraktion, z.B. die der gefriergetrockneten oder eingefrorenen Proben, durch weitere Schritte unterstützt, z.B. durch Homogenisierungs- und Dispergiertechniken (s. oben, z.B. in Fiehn, Anal. Chem. 2000. und Nature Biotechnology 2000, Sauter, 1991, Roessner, 2000, Bligh und Dyer, 1959, Strand, 1999 etc.).

So kann das Material z.B. durch Hitze, Schüttelmühle oder andere Mahlverfahren, Druck oder schnelle, aufeinander folgende Druckänderungen, Ultraschall-, Schockwellen-, Mikrowellen- und/oder Ultraturrax-Extraktionschritte aufgebrochen und die Inhaltsstoffe besser extrahiert werden. Diese Verfahren können unter Kühlung, z.B. bei 0°C, durchgeführt werden. Bei gefriergetrocknetem Material ist jedoch auch eine Aufarbeitung bei Raumtemperatur, d.h. bei 15 bis 25°C möglich. Vorteilhaft ist eine Extraktionsmethode, die die Automatisierung des Verfahrens zulässt. So kann z.B. eine ASE (Accelerated Solvent Extraction), PSE (Pressurised Solvent Extraction), PFE (Pressurised Fluid Extraction) oder PLE (Pressurised Liquid Extraction) durchgeführt werden, bei der das Lösungsmittel oder Lösungsmittelgemisch unter Druck und gegebenenfalls bei höherer Temperatur durch das Material durchgedrückt wird (siehe Björklund, Trends in Analytical Chemistry 2000, 19 (7), 434-445, Richter, American Laboratory 1995, 27, 24-28,Ezzell, LC-GC 1995, 13 (5), 390-398).

Erfindungsgemäß wird die Extraktion so durchgeführt, dass die Temperatur und der Druck so angepasst werden, dass die Inhaltsstoffe nicht zersetzt werden und die Extraktionseffizienz ausreichend ist, z.B. bei einer Temperatur von 0°C oder höher, vorteilhaft sind 20°C, mehr bevorzugt sind 40°C bis 200°C, vorteilhaft sind 150°C oder weniger, mehr bevorzugt sind 120°C oder weniger. Vorzugsweise wird das Verfahren bei 40 bar oder höher, mehr bevorzugt bei 70 bar, noch mehr bevorzugt bei 100 bar bis 200 bar, am meisten bevorzugt bei 110 bar bis 150 bar durchgeführt. Besonders bevorzugte Bedingungen sind somit eine Temperatur von 60°C bis 80°C, insbesondere 70°C und 110 bar bis 170 bar, insbesondere 140 bar. Die Extraktionszeit kann zwischen 30 s und 20 min liegen, bevorzugt sind weniger als 10 min, mehr bevorzugt sind 5 min. Besonders bevorzugt ist die Verwendung einer Temperatur von 60°C bis 80°C und eines Drucks von 110 bis 170 bar bei einer Extraktionszeit von weniger als 5 min. Die Extraktionsbedingungen sind erfindungsgemäß somit schonender als im Stand der Technik beschrieben und führen zu höheren Ausbeuten und höherer Stabilität der isolierten Inhaltsstoffe.

In einer bevorzugten Ausführungsform wird die Veresterung/Umesterung in der polaren und/oder unpolaren Phase mit einer flüchtigen Säure als Katalysator durchgeführt, vorzugsweise mit HF, HI, HCl, BF₃, BCl₃, HBr, Ameisensäure, Essigsäure, Trifluoressigsäure oder Trichloressigsäure, mehr bevorzugt ist BF₃, BCl₃, oder HCl, am meisten bevorzugt ist HCl als flüchtige Säure als Katalysator.

Nach der Extraktion können die Phasen in verschiedene Aliquots aufgeteilt werden und gegebenenfalls eingedampft werden, z.B. um flüchtige Säuren und Wasser zu entfernen und/oder die Proben für die folgenden Verfahrensschritte vorzubereiten, z.B. mit einem IR-Dancer (mit Infrarotstrahlung beheizte Schüttelvorrichtung unter reduziertem Druck), einer Vakuumzentrifuge oder durch Gefriertrocknung. Die Eindampfung sollte schonend geschehen, vorzugsweise unter 80°C, mehr bevorzugt unter 40°C, bevorzugt unter reduziertem Druck, je nach Lösungsmittel oder Lösungsmittelgemisch beispielsweise 10 mbar. Besonders bevorzugt, bei Verwendung von Dichlormethan/Methanol und/oder Methanol/Wasser-Gemischen, ist die Reduktion des Druckes in Schritten bis auf 10 mbar.

In einer weiteren Ausführungsform umfasst das erfindungsgemäße Verfahren weiterhin einen oder mehr Schritte, um die Inhaltsstoffe, z.B. aus den gewonnenen Extrakten oder den Phasen, zu derivatisieren, chromatographieren und/oder analysieren. Bevorzugt werden die Extrakte oder die Phasen in den folgenden Schritten des erfindungsgemäßen Verfahrens derivatisiert, chromatographiert und analysiert. Um die Extrakte weiter zu analysieren, müssen bestimmte Inhaltsstoffe je nach verwendeter Auftrennungs- und Analysemethode derivatisiert werden. So wird für eine gaschromatographische Auftrennung (GC) bevorzugt derivatisiert, während für eine flüssigchromatographische Auftrennung (LC) in der Regel keine Derivatisierung nötig ist. Gegebenenfalls ist auch ein Analyseverfahren ohne chromatographische Auftrennung möglich, z.B. Massenspektrometrie (MS), Atomabsorptionsspektrometrie (AAS) oder Kernresonanzspektrometrie (NMR).

In einer weiteren bevorzugten Ausführungsform enthält das erfindungsgemäße Verfahren zur Extraktion noch mindestens einen der folgenden weiteren Schritte:
i) Einfrieren des Materials, vorzugsweise schnelles Einfrieren des gewonnenen, z.B. geernteten, Materials;
ii) Homogenisieren- und/oder Dispergieren des Materials, vorzugsweise homogenisieren und dispergieren;
iii) Eindampfen der Extrakte, vorzugsweise nach Phasentrennung und/oder Veresterung/Umesterung zur Trockene;
iv) Durchführen einer Oximbildung in der unpolaren Phase;
v) Durchführen einer Oximbildung in der polaren Phase;
vi) Durchführen einer Trialkylsilylierung in der unpolaren Phase; oder
vii) Durchführen einer Trialkylsilylierung in der polaren Phase;

Vorteilhafterweise enthält das erfindungsgemäße Verfahren die genannten Schritte einzeln, mehr bevorzugt mehrere und am meisten bevorzugt alle, besonders bevorzugt ist die hierin genannte Reihenfolge.

Vorteilhaft wird das organische Material nach der Ernte sofort gekühlt, besser eingefroren, um so jede enzymatische Aktivität in der Probe oder in dem Material zu unterbinden und somit eine Veränderung in der Inhaltsstoffverteilung zu vermeiden. Bevorzugt wird das Einfrieren des Materials nach dem Gewinnen oder Ernten in weniger als 60 s, mehr bevorzugt sind 30 s, am meisten bevorzugt sind 15 s oder weniger durchgeführt. Ist das Material pflanzlich, kann die Probennahme direkt in der Phytotronkammer stattfinden. Das Material wird vorteilhaft nach der Gewinnung schnell gewogen und dann schnell und tief, z.B. in flüssigem Stickstoff, eingefroren und z.B. bei -80°C oder in flüssigem Stickstoff gelagert.

Nach der Veresterung/Umesterung kann die Lösung zum Entfernen der Säure, vorzugsweise bis zur Trockne, eingedampft werden, z.B. um flüchtige Säuren und Wasser zu entfernen und die Proben für die folgenden Verfahrensschritte vorzubereiten, z.B. mit IR-Dancer, Vakuumzentrifuge oder durch Gefriertrocknung. Die Eindampfung sollte schonend geschehen, vorzugsweise zwischen 5°C und 80°C, mehr bevorzugt zwischen 20°C und 40°C. Bevorzugt ist zudem die Durchführung des Verfahrens unter reduziertem Druck, je nach Lösungsmittel oder Lösungsmittelgemisch beispielsweise bei 100 mbar bis 10 mbar. Bei Verwendung von Dichlormethan/Methanol und/oder Methanol/Wasser-Gemischen ist die Reduktion des Druckes in Schritten auf beispielsweise 10 mbar besonders bevorzugt. Die eingesetzten Lösungsmittel können den Trocknungsschritt unterstützen, z.B. indem sie besonders leicht flüchtig sind oder als Schlepper die Verdampfung von Wasser unterstützen, wie z.B. Toluol.

In einer weiteren bevorzugten Ausführungsform wird in dem erfindungsgemäßen Verfahren in der unpolaren und/oder polaren Phase eine Oximbildung durchgeführt. Erfindungsgemäß wird unter Oxim eine Verbindung der Struktur (I) R-ONR' verstanden, 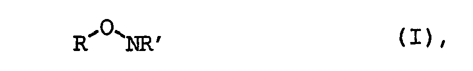 wobei R kann sein H oder ein Alkylrest, vorzugsweise ein Alkylrest mit 1 bis 6 Kohlenstoffatomen, insbesondere ein Methyl-, Ethyl-, Propyl-, Butyl-, Pentyl-, oder Hexylrest, oder ein substituierter oder unsubstituierter Arylalkylrest, vorzugsweise mit 5 bis 7 Kohlenstoffatomen im Arylalkylrest und mit 0 bis 2 Heteroatomen im Ring oder in der Kette des Arylalkylrestes, z.B. ein substituierter oder unsubstituierter Benzylrest, insbesondere ein halogenierter Benzylrest mit 1 bis 7 Halogenresten, vorzugsweise ein Pentafluorbenzylrest und wobei R' ein beliebiger zweibindiger Rest sein kann.

Erfindungsgemäß können als Reaktionspartner zur Oximbildung Verbindungen der Struktur (Ib) R-ONH₂, wobei R wie oben definiert ist, vorzugsweise Hydroxylamin oder O-substituierte Hydroxylamine oder jeweils deren Salz mit einer flüchtigen Säure, z.B. Hydrochloride, wie O-Alkylhydroxylamin-Hydrochlorid oder O-Pentafluorbenzylhydroxylamin-Hydrochlorid, nach dem Fachmann bekannten Verfahren (s.a. Fiehn, Anal. Chem. 2000), z.B. gelöst in einem geeigneten Lösungsmittelgemisch oder Lösungsmittel, wie z.B. Pyridin, verwendet werden. Bevorzugt ist ein erfindungsgemäßes Verfahren, wobei zur Oximbildung O-Methyl-Hydroxylamin-Hydrochlorid (II), O-Pentafluorbenzylhydroxylamin-Hydrochlorid (III) oder O-Ethyl-Hydroxylamin-Hydrochlorid (IV) eingesetzt wird, am meisten bevorzugt ist O-Methyl-Hydroxylamin-Hydrochlorid (II).

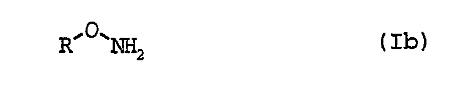

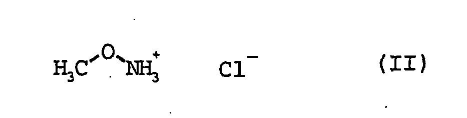

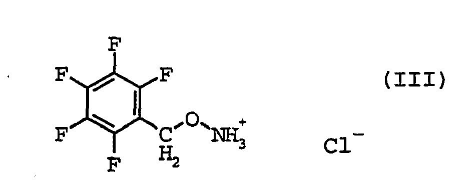

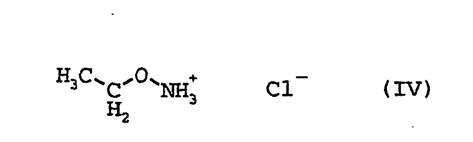

Die Reaktion kann für 30 min bis 6 h, vorzugsweise für 1 h bis 2 h durchgeführt werden, vorzugsweise bei mindestens 20°C bis 80°C, mehr bevorzugt bei 50°C bis 60°C. Besonders bevorzugt ist die Durchführung für 1 h bis 2 h bei 50°C bis 60°C.

In einer weiteren erfindungsgemäßen Ausführungsform wird in der polaren und/oder unpolaren Phase eine Trialkylsilylierung durchgeführt. Die Trialkylsilylierung kann erfindungsgemäß mit einer Verbindung der Formel Si(R¹⁻⁴)₄ durchgeführt werden, wobei R⁴ vorzugsweise ein N-C₁₋₄-Alkyl-2,2,2-Trifluoracetamid, besonders bevorzugt ein N-Methyl-2,2,2-Trifluoracetamid, ist, wie in Formel (V). Besonders bevorzugt ist somit die Trialkylsilylierung mit einer Verbindung der Formel (V) 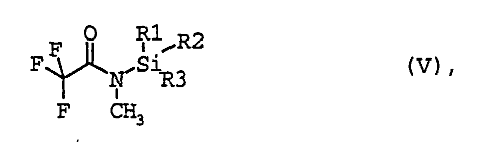 wobei R¹, R² und/oder R³ unabhängig voneinander Alkylreste mit jeweils 1 bis 6 Kohlenstoffatomen sein können, insbesondere CH₃, C₂H₅, C₃H₇ oder C₄H₉ mit folgenden Strukturformeln für C₃H₇ und C₄H₉: 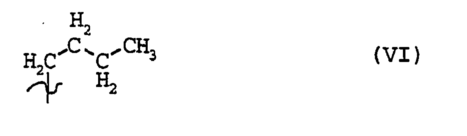 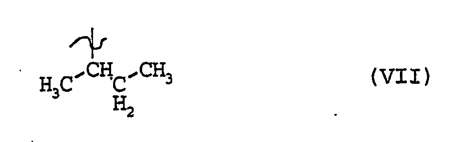 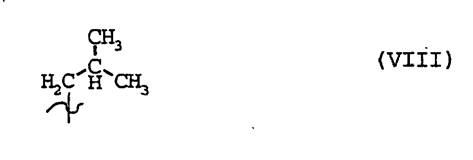 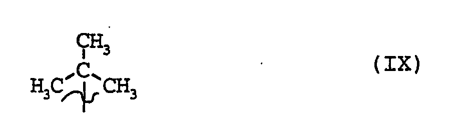 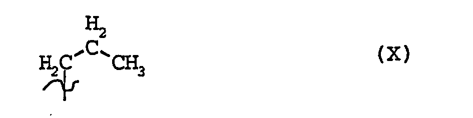 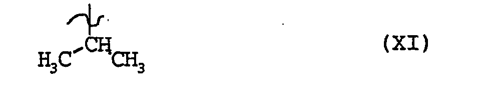 bevorzugt sind R¹ oder R² Methylreste, besonders bevorzugt sind R¹ und R² Methylreste. R³ ist bevorzugt ein geradkettiger oder verzweigter Alkylrest mit 1 bis 4 Kohlenstoffatomen wie oben beschrieben, besonders bevorzugt ein Methylrest oder tert-Butylrest, mehr bevorzugt ist R³ ein Methylrest. Vorzugsweise wird eine Trimethylsilylierung mit MSTFA (N-Methyl-N-(trimethylsilyl)-2,2,2-trifluoracetamid durchgeführt. Die Reaktion kann für 10 min bis 120 min, vorzugsweise für 20 min bis 60 min bei 20°C bis 90°C, vorzugsweise zwischen 40°C und 70°C erfolgen.

Vor der Trialkylsilylierung können vorzugsweise ein oder mehrere interne(r) Standard(s) und/oder Chromatographiestandard(s) hinzugegeben werden. In einer Ausführungsform werden in dem erfindungsgemäßen Verfahren zur Extraktion Lösungsmittel oder Lösungsmittelgemische verwendet, die zusätzlich noch bis zu 5 Gew.-%, mehr bevorzugt sind bis zu 3 Gew.-%, noch mehr bevorzugt sind bis zu 1 Gew.-% Puffersalze, Säuren und/oder Basen enthalten. Bevorzugt sind flüchtige Puffersysteme. So können z.B. erfindungsgemäß Ammoniumformiat-, Ammoniumcarbonat-, Ammoniumchlorid-, Ammoniumacetat- oder Ammoniumhydrogencarbonat-Lösung und/oder eine Säure, z.B. Ameisensäure, Essigsäure, Trifluoressigsäure, Pentafluorpropansäure, Heptafluorbutansäure, Nonafluorpentansäure, Undecafluorhexansäure, Tridecafluorheptansäure oder Pentadecafluoroctansäure und/oder eine Base wie z.B. Triethylamin, Pyridin oder Ammoniak eingesetzt werden.

Vorteilhaft ist es, das vereinigte Gemisch aus Schritt (c) mit einem oder mehreren Analysestandards, z.B. internen Standards und/oder Chromatographiestandards zu versetzen. Solche Standards können z.B. in den natürlichen Proben nicht vorkommende, aber den analysierten Substanzen ähnliche Verbindungen, einschließlich isotopenmarkierte, radioaktiv oder Fluoreszenz-markierte Substanzen sein, wie für Zucker z.B. Ribitol oder alpha-Methylglucopyranosid, für Aminosäuren z.B. L-Glycin-2,2-d₂ oder L-Alanin-2,3,3,3-d₄, für Fettsäuren oder deren Derivate insbesondere ungeradzahlige Fettsäuren oder deren Methylester, z.B. Undecansäure-, Tridecansäure-, oder Nonacosansäuremethylester. Die Standards können auch einzeln zu dem jeweiligen Extrakt aus Schritt (b) zugegeben werden.

Das erfindungsgemäße Verfahren umfasst auch Schritte zur Auftrennung und Analyse, wobei die Extrakte vorteilhaft über eine LC, GC oder CE (Kapillarelektrophorese) aufgetrennt werden können.

Nach dem oben genannten Eindampfen können die erfindungsgemäß hergestellten Extrakte in HPLC-Lösungsmitteln oder Lösungsmittelgemischen aufgenommen werden und dann in der LC analysiert werden. Als Laufmittel kommen Mischungen aus z.B. Methanol, Acetonitril oder Ethanol und/oder tert.-Butylmethylether (Methyltert-butyl-ether), Tetrahydrofuran, Isopropanol oder Aceton und/oder Wasser und/oder einem Salz, wie z.B. Ammoniumformiat-, Ammoniumcarbonat-, Ammoniumchlorid-, Ammoniumacetat-, oder Ammoniumhydrogencarbonat-Lösung und/oder einer Säure, z.B. Ameisensäure, Essigsäure, Trifluoressigsäure, Pentafluorpropansäure, Heptafluorbutansäure, Nonafluorpentansäure, Undecafluorhexansäure, Tridecafluorheptansäure oder Pentadecafluoroctansäure und/oder einer Base, wie z.B. Triethylamin, Pyridin oder Ammoniak in Betracht, je nachdem, ob polare oder unpolare Extrakte aufgetrennt werden sollen. In der Regel wird eine Gradientenelution durchgeführt, vorzugsweise schließt sich eine massenspektrometrische Detektion an, z.B. eine MS- oder MS/MS-Detektion (einfache massenspektrometrische bzw. tandem-massenspektrometrische Detektion).

Nach GC kann eine Detektion der Inhaltsstoffe z.B. mittels EI-MS (Elektronenstoßionisation und Analyse mittels Massenspektrometer) oder CI-MS (Chemische Ionisation und Analyse mittels Massenspektrometer), Sektorfeld-, Quadrupol-, Time-of-Flight-, Ion-Trap- oder Fourier-Transform-Ion-Cyclotron-Resonance-Massenspektrometrie, FID (Flammenionisationsdetektor) oder Fourier-Transform-Infrarotspektroskopie erfolgen, nach LC z.B. mittels Sektorfeld-, Quadrupol-, Time-of-Flight-, Ion-Trap- oder Fourier-Transform-Ion-Cyclotron-Resonance-Massenspektrometrie, UV/Vis-Absorptionsdetektion, Fluoreszenz-Detektion, NMR oder Infrarotspektroskopie. Vorzugsweise umfasst das erfindungsgemäße Verfahren eine MS (Massenspektrometrie), LC/MS- (Flüssigkeitschromatographie gekoppelt an eine beliebige massenspektrometrische Detektion), GC/MS- (Gaschromatographie gekoppelt an eine beliebige massenspektrometrische Detektion) und/oder LC/MS/MS-Analyse (Flüssigkeitschromatographie gekoppelt an eine beliebige tandem-massenspektrometrische Detektion), am meisten bevorzugt eine LC/MS-, GC/MS- und/oder LC/MS/MS-Analyse.

Folglich können nach dem erfindungsgemäßen Verfahren die Extrakte nach dem Eintrocknen und erneutem Lösen in einem geeigneten Lösungsmittel oder Lösungsmittelgemisch fraktioniert und/oder aufgetrennt, z.B. mittels LC und/oder GC aufgetrennt werden und dann die Inhaltsstoffe analysiert, detektiert und quantifiziert werden, z.B. per MS.

Zur-Durchführung der GC-Analyse kann mit der unpolaren Phase und/oder der polaren Phase eine Umesterung/Veresterung, insbesondere mit Methanol oder Ethanol und dann eine Oximbildung, vorzugsweise eine Methoximierung, durchgeführt werden, wie oben beschrieben. Vorzugsweise können Standardsubstanzen, z.B. Chromatographie- und/oder interne Standards, zu jeder Probe oder dem jeweiligen Extrakt gegeben werden, z.B. eine Lösung aus ungeradzahligen, geradkettigen Fettsäuren oder Kohlenwasserstoffen. Anschließend findet eine Trialkylsilylierung der Extrakte statt, wobei die Oximierung und/oder die Trialkylsilylierung der unpolaren Phase optional ist.

Diese Schritte können so wie hierin beschrieben durchgeführt werden, aber auch einzeln mit anderen Schritten, z.B. anderen Trennungs- und Analysemethoden, kombiniert werden und dementsprechend angepasst werden.

In einer besonders bevorzugten Ausführungsform besteht das Material aus pflanzlichem Material. Der wesentliche Teil des Stands der Technik beschreibt nur die Analyse aus Flüssigkeiten, nicht aus festem Material. Die Aufbereitung von Pflanzenzellen unterscheidet sich insoweit von der von tierischen Zellen oder Geweben, als dass tierische Zellen nur eine Zellmembran besitzen, Pflanzenzellen jedoch von einer Zellwand umgeben sind. Beispielsweise können Pflanzenpopulationen oder -spezies, z.B. genetisch veränderte oder gestresste Pflanzen, extrahiert werden. Ebenfalls können Homogenate aus einer großen Anzahl an Organismen hergestellt werden. Zur Überprüfung der Empfindlichkeit, Genauigkeit, Präzision, Variabilität und Reproduzierbarkeit können Standardlösungen oder mit Standardlösungen vermischtes Material in dem Verfahren getestet werden. Dazu kann das organische Material z.B. mit definierten Mengen an Standardsubstanzen aufgestockt werden.

Vorzugsweise werden die durch das erfindungsgemäße Verfahren erhaltenen Informationen und Daten automatisch ausgewertet und in einer Datenbank gespeichert. Bei einer großen Anzahl an Proben wird vorzugsweise eine automatische Peakerkennung und Peakintegration der Ergebnisdaten eingesetzt.

In einer bevorzugten Ausführungsform ist das erfindungsgemäße Verfahren auf hohen Durchsatz, geringe Variabilität und hohe Reproduzierbarkeit optimiert und enthält vorzugsweise folgende Schritte:
(i) Gewinnen des organischen Materials und Kühlung oder Einfrieren innerhalb von 60 sec nach Gewinnen;
(ii) Gefriertrocknen des Materials;
(iii) Extrahieren mit Lösungsmittelgemisch (A) aus 80 Vol.-% Methanol und 20 Vol.-% Wasser und Lösungsmittelgemisch (B) aus 40 Vol.-% Methanol und 60 Vol.-% Dichlormethan und Vereinen der Extrakte;
(iv) Zugabe von Standards zu dem/den Extrakt(en);
(v) Eindampfen der Extrakte nach Phasentrennung und Veresterung/Umesterung zur Trockene;
(vi) Durchführen einer Veresterung/Umesterung in der unpolaren Phasen mit HC1; und
(vii) Analyse der Extrakte per MS-, LC/MS-, LC/MS/MS- und/oder GC/MS-Analyse.
   Besonders bevorzugt ist ein Verfahren, wobei das organische Material durch eine ASE extrahiert wird. Gegebenenfalls können die Extrakte über eine Festphasenextraktion weiter fraktioniert werden.
   In einer weiteren Ausführungsform ist das Verfahren Teil eines Verfahrens zur Analyse eines metabolischen Profils. Vorteilhaft betrifft somit die Erfindung ein Verfahren zur Erstellung eines metabolischen Profils im Hochdurchsatz, umfassend die obengenannten erfindungsgemäßen Verfahrensschritte und folgenden weiteren Schritt:
(viii) Analyse der Ergebnisdaten mittels automatischer Peakerkennung und Peakintegration.

Die Bestimmung eines komplexen metabolischen Profils der in einer organischen Probe vorhandenen Metaboliten und Inhaltsstoffe bei einer großen Probenanzahl, ermöglicht die direkte Untersuchung von unmittelbaren Wachstums-, Entwicklungs- oder Stresseinflüssen auf den gesamten Organismus oder Teilen davon und ist somit ein wesentlicher Teil der funktionale Genomanalyse bei der Bestimmung von Gen-Funktionen. Verfahren zur Analyse von komplexen Metaboliten-Profilen, insbesondere wenn sie zur Analyse von größeren Probenzahlen geeignet sind, erlauben die Komplexität der regulatorischen Wechselwirkungen auf allen Ebenen und in allen Stadien sowie die Wirkung von endogenen wie exogenen Faktoren zu.untersuchen.

So kann das erfindungsgemäße Verfahren beispielsweise verwendet werden, um
a) Auswirkungen genetischer Unterschiede auf das metabolische Profil,
b) den Einfluss von z.B. Umgebungsbedingungen, Stress, chemische Substanzen etc.,
c) die Wechselwirkung zwischen a) und b) oder
d) den zeitlichen Verlauf von a), b) oder c) zu untersuchen,
wie z.B. in Untersuchungen des Einflusses von ein oder mehr Substanzen (z.B. auch Substanzbibliotheken), oder Stressfaktoren, wie z.B. Trockenheit, Hitze, Kühle, Frost, Mangel, Salz, Lichtentzug, etc., auf das metabolische Profil von z.B. genetisch möglichst identischen, genetisch verwandten bis zu genetisch möglichst unterschiedlichen Organismen.

Die vorliegende Erfindung wird durch die folgenden Beispiele verdeutlicht, ohne dass dies in irgendeiner Weise als einschränkend gilt.

### Beispiel 1

Probennahme und Lagerung der Proben

Die Probenahme findet direkt in der Phytotronkammer statt.
Die Pflanzen wurden mit einer kleinen Laborschere abgeschnitten, rasch auf einer Laborwaage gewogen, in eine vorgekühlte Extraktionshülse überführt und in ein Aluminiumrack das durch Flüssigstickstoff gekühlt ist, gesteckt. Wenn erforderlich, können die Extraktionshülsen bei -80°C im Gefrierschrank gelagert werden. Die Zeit vom Abschneiden der Pflanze bis zum Einfrieren in Flüssigstickstoff überschritt 10 bis 20 s nicht.

### Beispiel 2

### Gefriertrocknung

Es wurde darauf geachtet, dass während des Versuches die Pflanzen bis zum ersten Kontakt mit Lösemitteln entweder in tiefkaltem Zustand blieben (Temperaturen < -40°C) oder durch Gefriertrocknen vom Wasser befreit wurden.

Das Aluminiumrack mit den Pflanzenproben in den Extraktionshülsen wurde in die vorgekühlte (-40°C) Gefriertrocknungsanlage gestellt. Die Anfangstemperatur während der Haupttrocknung betrug -35°C, der Druck betrug 0,120 mbar. Während der Trocknung wurden die Parameter entsprechend eines Druck- und Temperaturprogrammes verändert. Die Endtemperatur nach 12 Stunden betrug +30°C, und der Enddruck lag bei 0,001 bis 0,004 mbar. Nach dem Abschalten der Vakuumpumpe und der Kältemaschine wurde das System mit Luft (durch ein Trockenrohr getrocknet) oder Argon belüftet.

### Beispiel 3

### Extraktion

Die Extraktionshülsen mit dem gefriergetrockneten Pflanzenmaterial wurden unmittelbar nach der Belüftung des Gefriertrocknungsgerätes in die 5-mL-Extraktionskartuschen der ASE überführt.

Die 24 Probenpositionen eines ASE-Gerätes (Accelerated Solvent Extractor ASE 200 mit Solvent Controller und AutoASE-Software (Firma DIONEX)) werden mit Pflanzenproben gefüllt.

Die polaren Substanzen wurden mit ca. 10 mL Methanol/Wasser (80/20, v/v) bei T = 70°C und p = 140 bar, 5 min Aufheizphase, 1 min statische Extraktion, extrahiert. Die lipophileren Substanzen wurden mit ca. 10 mL Methanol/Dichloromethan (40/60, v/v) bei T = 70°C und p = 140 bar, 5 min Aufheizphase, 1 min statische Extraktion, extrahiert. Beide Lösemittelgemische werden in dasselbe Probengläschen (Zentrifugengläser, 50 mL mit Schraubkappe und durchstechbarem Septum für die ASE (DIONEX)) extrahiert.

Die Lösung wurde mit internen Standards versetzt: Ribitol, L-Glycin-2,2-d₂, L-Alanin-2,3,3,3-d₄ und a-Methylglucopyranosid und Nonadecansäure-Methylester, Undecansäure-Methylester, Tridecansäure-Methylester, Nonacosansäure-Methylester.

Der Gesamtextrakt wurde mit 7 mL Wasser versetzt. Der feste Rückstand der Pflanzenprobe und die Extraktionshülse wurden verworfen.

Der Extrakt wurde geschüttelt und dann bei mindestens 1400 g für 5 bis 10 min zentrifugiert, um die Phasentrennung zu beschleunigen. 1 mL der überstehenden Methanol/Wasser-Phase ("polare Phase", farblos) wurde für die weitere GC-Analyse abgenommen, 1 mL wurde für die LC-Analyse entnommen. Der Rest der Methanol/Wasser-Phase wurde verworfen. Die organische Phase wurde nochmals mit demselben Volumen Wasser (7 mL) gewaschen und zentrifugiert. 0,5 mL der organischen Phase ("lipide Phase", dunkelgrün) wurde für die weitere GC-Analyse entnommen, 0,5 mL wurden für die LC-Analyse entnommen. Alle entnommenen Aliquote wurden mit dem IR-Dancer Infrarot-Vakuum-Evaporator (Bettich) zur Trockne eingedampft. Die maximale Temperatur während des Eindampf-Vorgangs überschritt dabei nicht 40°C. Der Druck im Gerät betrug nicht weniger als 10 mbar.

### Beispiel 4

Weiterverarbeitung der Lipid-Phase für die LC/MS- oder LC/MS/MS-Analyse

Der zur Trockne eingedampfte lipide Extrakt wurde in Laufmittel aufgenommen. Der HPLC-Lauf wurde mit Gradientenelution durchgeführt.

### Beispiel 5

Weiterverarbeitung der polaren Phase für die LC/MS- oder LC/MS/MS-Analyse

Der zur Trockne eingedampfte polare Extrakt wurde in Laufmittel aufgenommen. Der HPLC-Lauf wurde mit einer Gradientenelution durchgeführt.

### Beispiel 6

### Derivatisierung der Lipid-Phase für die GC/MS-Analyse

Zur Transmethanolyse wurde eine Mischung aus 140 µL Chloroform, 37 µL Salzsäure (37 Gew.-% HCl in Wasser), 320 µL Methanol und 20 µL Toluol zu dem eingedampften Extrakt zugefügt. Das Gefäß wurde dicht verschlossen und unter Schütteln 2 h bei 100°C erhitzt. Anschließend wurde die Lösung zur Trockne eingedampft. Der Rückstand wurde vollständig getrocknet.

Die Methoximierung der Carbonylgruppen erfolgte durch Reaktion mit Methoxyamin-Hydrochlorid (5 mg/mL in Pyridin, 100 µL) für 1,5 h bei 60°C im dicht verschlossenen Gefäß. 20 µL einer Lösung von ungeradzahligen, geradkettigen Fettsäuren wurden als Zeit-standards zugesetzt. Schließlich wurde mit 100 µL N-Methyl-N-(trimethylsilyl)-2,2,2-trifluoracetamid (MSTFA) für 30 min bei 60°C im wieder dicht verschlossenen Gefäß derivatisiert.
Das Endvolumen vor der GC-Injektion war 200 µL.

### Beispiel 7

### Derivatisierung der polaren Phase für die GC/MS-Analyse

Die Methoximierung und die Trimethylsilylierung mit MSTFA erfolgte wie für die Lipid-Phase beschrieben.

## Patentansprüche

1. Verfahren zur Isolation von Inhaltsstoffen aus organischem Material, das folgende Verfahrensschritte umfasst:
a) Gefriertrocknen des organischen Materials;
b) Extrahieren der Inhaltsstoffe mit einem polaren Lösungsmittel oder Lösungsmittelgemisch (A) und einem organischen Lösungsmittel oder Lösungsmittelgemisch (B), wobei die vereinigten Extrakte aus dem Extrahieren mit (A) und (B) eine Phase bilden können und wobei das Lösungsmittel oder Lösungsmittelgemisch (B) unpolarer ist als das Lösungsmittel oder Lösungsmittelgemisch (A);
c) Vereinen der Extrakte aus dem Extrahieren mit (A) und (B) zu einer Phase und folgendes Trennen in eine polare und eine unpolare Phase; und
d) Durchführen einer Veresterung/Umesterung in der unpolaren_Phase mit einem Alkohol,
wobei die Veresterung/Umesterung in Gegenwart einer flüchtigen Säure durchgeführt wird; wobei das Verfahren ein Hochdurchsatzverfahren ist.

2. Verfahren nach Anspruch 1, wobei das polare Lösungsmittel oder Lösungsmittelgemisch (A) aus einem einphasigen Gemisch aus 50 bis 90 Vol.-% C₁- bis C₆-Alkylalkohol, 10 bis 50 Vol.-% Wasser und 40 bis 0 Vol.-% eines weiteren Lösungsmittels oder Lösungsmittelgemisches, besteht.

3. Verfahren nach Anspruch 1 oder 2, wobei das organische Lösungsmittel oder Lösungsmittelgemisch (B) aus einem einphasigen Gemisch aus 30 Vol.-% bis 60 Vol.-% C₁- bis C₆-Alkylalkohol, 40 Vol.-% bis 70 Vol.-% Chloroform oder Dichlormethan und 0 Vol.-% bis 30 Vol.-% eines weiteren Lösungsmittels oder Lösungsmittelgemisches, besteht.

4. Verfahren nach einem der Ansprüche 1 bis 3, wobei das Extrahieren mittels Accelerated Solvent Extraction, Pressurised Liquid Extraction, Pressurized Fluid Extraction, Ultraschall-, Schockwellen- oder Mikrowellenextraktion, oder mittels Schüttelmühle oder Ultraturrax durchgeführt wird.

5. Verfahren nach einem der Ansprüche 1 bis 4, wobei das Extrahieren bei einer Temperatur 0°C bis 200°C und/oder bei 40 bar bis 200 bar durchgeführt wird.

6. Verfahren nach einem der Ansprüche 1 bis 5, wobei als flüchtige Säure zur Veresterung/Umesterung HCl, HBr, BF₃, BCl₃, Trifluoressigsäure, Trichloressigsäure oder HI verwendet wird.

7. Verfahren nach einem der Ansprüche 1 bis 6, wobei als Alkoholkomponente zur Veresterung/Umesterung ein gesättigter oder ungesättigter, geradkettiger, verzweigtkettiger oder ringförmiger Alkylalkohol mit 1 bis 8 Kohlenstoffatomen verwendet wird.

8. Verfahren nach einem der Ansprüche 1 bis 7, wobei die Inhaltsstoffe in einem oder mehr weiteren Schritten derivatisiert, chromatographiert und/oder analysiert werden.

9. Verfahren nach einem der Ansprüche 1 bis 8, wobei das Verfahren mindestens einen der weiteren Schritte enthält:
i) Einfrieren des Materials;
ii) Homogenisieren und/oder Dispergieren des Materials;
iii) Eindampfen der Extrakte nach Phasentrennung und/oder nach Veresterung/Umesterung zur Trockene;
iv) Durchführen einer Oximbildung in der unpolaren Phase;
v) Durchführen einer Oximbildung in der polaren Phase;
vi) Durchführen einer Trialkylsilylierung in der unpolaren Phase; oder
vii) Durchführen einer Trialkylsilylierung in der polaren Phase.

10. Verfahren nach Anspruch 9, wobei die Trialkylsilylierung eine Trimethylsilylierung ist.

11. Verfahren nach einem der Ansprüche 1 bis 10, wobei die Extrakte oder die vereinigten Extrakte mit einem oder mehr Analysestandards versetzt werden.

12. Verfahren nach einem der Ansprüche 1 bis 11, wobei die Phasen jeweils über eine LC-, MS-, GC-, LC/MS-, GC/MS- und/oder LC/MS/MS-Analyse analysiert werden.

13. Verfahren nach einem der Ansprüche 1 bis 12, wobei die zur Extraktion verwendeten Lösungsmittel oder Lösungsmittelgemische zusätzlich noch bis zu 5 Gew-% Puffersalze, Säuren und/oder Basen enthalten.

14. Verfahren nach einem der Ansprüche 1 bis 13, wobei das Material aus pflanzlichem Material besteht.

15. Verfahren zur Erstellung eines metabolischen Profils im Hochdurchsatz, umfassend die Verfahrensschritte nach einem der Ansprüche 1 bis 14 und folgenden weiteren Schritt:
(viii) Analyse der Ergebnisdaten mittels automatischer Peakerkennung und Peakintegration.

## Claims

1. A process for isolating constituents from organic material, comprising the following process steps:
a) freeze-drying of the organic material;
b) extracting the constituents with a polar solvent or solvent mixture (A) and an organic solvent or solvent mixture (B), it being possible for the combined extracts of the extraction with (A) and (B) to form one phase and the solvent or solvent mixture (B) being more unpolar than the solvent or solvent mixture (A);
c) combining the extracts from the extracting with (A) and (B) to give one phase and subsequent separation into a polar and an unpolar phase; and
d) carrying out an esterification/transesterification in the unpolar phase with an alcohol, the esterification/transesterification being carried out in the presence of a volatile acid;
the process being a high-throughput process.

2. The process according to claim 1, wherein the polar solvent or solvent mixture (A) is composed of a monophasic mixture of 50 to 90% by volume of C₁-C₆-alkyl alcohol, 10 to 50% by volume of water and 40 to 0% by volume of a further solvent or solvent mixture.

3. The process according to claim 1 or 2, wherein the organic solvent or solvent mixture (B) is composed of a monophasic mixture of 30% by volume to 60% by volume of C₁- to C₆-alkyl alcohol, 40% by volume to 70% by volume of chloroform or dichloromethane and 0% by volume to 30% by volume of a further solvent or solvent mixture.

4. The process according to any of claims 1 to 3, wherein the extraction is carried out by means of accelerated solvent extraction, pressurized liquid extraction, pressurized fluid extraction, ultrasonic extraction, shock-wave extraction, microwave extraction, or by means of a vibrating mill or an Ultraturrax.

5. The process according to any of claims 1 to 4, wherein the extraction is carried out at a temperature of from 0°C to 200°C and/or at 40 bar to 200 bar.

6. The process according to any of claims 1 to 5, wherein the volatile acid used for the esterification/transesterification is HC1, HBr, BF₃, BCl₃, trifluoroacetic acid, trichloroacetic acid or HI.

7. The process according to any of claims 1 to 6, wherein the alcohol component used for the esterification/transesterification is saturated or unsaturated, straight-chain, branched-chain or cyclic alkyl alcohol with 1 to 8 carbon atoms.

8. The process according to any of claims 1 to 7, wherein the constituents are derivatized, chromatographed, and/or analyzed in one or more further steps.

9. The process according to any of claims 1 to 8, the process comprising at least one of the further steps:
i) freezing the material;
ii) homogenizing and/or dispersing the material;
iii) following phase separation and/or esterification/transesterification, evaporating the extracts to dryness;
iv) carrying out an oxime formation in the unpolar phase;
v) carrying out an oxime formation in the polar phase;
vi) carrying out a trialkylsilylation in the unpolar phase; or
vii) carrying out a trialkylsilylation in the polar phase.

10. The process according to claim 9, wherein the trialkylsilylation is a trimethylsilylation.

11. The process according to any of claims 1 to 10, wherein the extracts or the combined extracts are treated with one or more analysis standard(s).

12. The process according to any of claims 1 to 11, wherein the phases are analyzed in each case by LC, MS, GC, LC/MS, GC/MS and/or LC/MS/MS analysis.

13. The process according to any of claims 1 to 12, wherein the solvent or solvent mixtures used for the extraction additionally comprise up to 5% by weight of buffer salts, acids and/or bases.

14. The process according to any of claims 1 to 13, the material consisting of plant material.

15. A high-throughput process for establishing a metabolic profile, comprising the process steps according to any of claims 1 to 14 and the following further step:
(viii) analysis of the resulting data by automatic peak recognition and peak integration.

## Revendications

1. Procédé d'isolement de substances à partir d'une matière organique, qui comporte les étapes suivantes :
a) une lyophilisation de la matière organique,
b) une extraction des substances avec un solvant ou mélange de solvants polaires (A) et un solvant ou mélange de solvants organiques (B), les extraits réunis de l'extraction avec (A) et (B) pouvant former une phase et le solvant ou mélange de solvants (B) étant moins polaire que le solvant ou mélange de solvants (A),
c) une réunion des extraits de l'extraction avec (A) et (B) en une phase et une séparation ultérieure en une phase polaire et une phase non polaire, et
d) une mise en oeuvre d'une estérification/transestérification dans la phase non polaire à l'aide d'un alcool, l'estérification/transestérification étant effectuée en présence d'un acide volatil, le procédé étant un procédé à haut débit.

2. Procédé suivant la revendication 1, dans lequel le solvant ou mélange de solvants polaires (A) est constitué d'un mélange monophasique à base de 50 à 90 % en volume d'alcool alkylique en C₁-C₆, de 10 à 50 % en volume d'eau et de 40 à 0 % en volume d'un autre solvant ou mélange de solvants.

3. Procédé suivant la revendication 1 ou 2, dans lequel le solvant ou mélange de solvants organiques (B) est constitué d'un mélange monophasique à base de 30 % en volume à 60 % en volume d'alcool alkylique en C₁-C₆, de 40 % en volume à 70 % en volume de chloroforme ou de dichlorométhane et de 0 % en volume à 30 % en volume d'un autre solvant ou mélange de solvants.

4. Procédé suivant l'une des revendications 1 à 3, dans lequel l'extraction est effectuée au moyen d'une extraction par solvant accéléré, d'une extraction par liquide sous pression, d'une extraction par fluide sous pression, d'une extraction à ultrasons, à ondes de choc ou à micro-ondes, ou au moyen d'un moulin secoueur ou d'un Ultraturrax.

5. Procédé suivant l'une des revendications 1 à 4, dans lequel l'extraction est effectuée à une température de 0°C à 200°C et/ou à 40 bars jusqu'à 200 bars.

6. Procédé suivant l'une des revendications 1 à 5, dans lequel, comme acide volatil pour l'estérification/transestérification, on utilise HCl, HBr, BF₃, BCl₃, de l'acide trifluoroacétique, de l'acide trichloroacétique ou HI.

7. Procédé suivant l'une des revendications 1 à 6, dans lequel, comme composant alcoolique pour l'estérification/transestérification, on utilise un alcool alkylique saturé ou insaturé, linéaire, ramifié ou cyclique, comportant 1 à 8 atomes de carbone.

8. Procédé suivant l'une des revendications 1 à 7, dans lequel les substances sont converties en dérivés, chromatographiées et/ou analysées dans une ou plusieurs autres étapes.

9. Procédé suivant l'une des revendications 1 à 8, dans lequel le procédé comporte au moins une des autres étapes :
i) une congélation de la matière,
ii) une homogénéisation et/ou dispersion de la matière,
iii) une évaporation des extraits jusqu'à siccité après séparation des phases et/ou après estérification/transestérification,
iv) une mise en oeuvre d'une formation d'oxime dans la phase non polaire,
v) une mise en oeuvre d'une formation d'oxime dans la phase polaire,
vi) une mise en oeuvre d'une trialkylsilylation dans la phase non polaire, ou
vii) une mise en oeuvre d'une trialkylsilylation dans la phase polaire.

10. Procédé suivant la revendication 9, dans lequel la trialkylsilylation est une triméthylsilylation.

11. Procédé suivant l'une des revendications 1 à 10, dans lequel les extraits ou les extraits réunis sont additionnés d'un ou de plusieurs standards d'analyse.

12. Procédé suivant l'une des revendications 1 à 11, dans lequel les phases sont chaque fois analysées par l'intermédiaire d'une analyse LC, MS, GC, LC/MS, GC/MS et/ou LC/MS/MS.

13. Procédé suivant l'une des revendications 1 à 12, dans lequel le solvant ou mélange de solvants utilisé pour l'extraction contient en supplément encore jusqu'à 5 % en poids de sels tampon, d'acides et/ou de bases.

14. Procédé suivant l'une des revendications 1 à 13, dans lequel la matière est constituée d'une matière végétale.

15. Procédé pour l'établissement d'un profil métabolique dans un haut débit, comportant les étapes suivant l'une des revendications 1 à 14 et une autre étape suivante :
viii)une analyse des données résultantes au moyen d'une reconnaissance de pic et d'une intégration de pic automatiques.
